# EUROPEAN PATENT APPLICATION

(11) **EP 2 704 144 A2**
(43) Date of publication of application: **05.03.2014**
(21) Application number: 13182282.7
(22) Date of filing: 29.08.2013
(51) Int. Cl.: G11B 5/39, G11B 5/60

(54) **Magnetic element with multiple selective transducing elements**

(30) Priority: 29.08.2012 US 201213598101
(71) Applicant: Seagate Technology LLC, Cupertino CA 95014 (US)
(72) Inventor: Lou, Huazhou, Eden Prairie, MN Minnesota 55347 (US); Anaya Defresne, Manuel Charles, Edina, MN Minnesota 55439 (US); Macken, Declan, Prior Lake, MN Minnesota 55372 (US); Karr, Brian William, Savage, MN Minnesota 55378 (US)
(74) Representative: Miller Sturt Kenyon

(57) **Abstract**

An apparatus and generally associated method may be directed to a magnetic reader capable of concurrently or independently data access and environmental measurements. Various embodiments construct such a magnetic reader with first and second data transducing elements that are each adapted to selectively read data and measure clearance from an adjacent data storage media.

## Description

Various embodiments of the present disclosure are generally directed to a magnetic reader that is capable of data access and environmental measurements. In accordance with various embodiments, a magnetic element may be constructed with first and second data transducing elements that are each adapted to selectively read data and measure clearance from an adjacent data storage media.

According to one aspect of the present invention, there is provided an apparatus comprising first and second data transducing elements each adapted to selectively read data and measure clearance from an adjacent data storage media. The apparatus may be a magnetic element, which may be provided separately from other components, or may be a data storage device, or a component or a compound component for such a device.

Preferably, each data transducing element is a magnetoresistive sensor.

Preferably, at least one of the data transducing elements comprises multiple magnetically free layers and no fixed magnetization reference.

In this case, it is preferred that a bias magnet is positioned adjacent the first transducing element, distal an air bearing surface.

Preferably, the second data transducing element has a greater air bearing surface area than the first data transducing element.

Preferably, the second data transducing element is configured as a spin valve comprising metallic ferromagnetic layers.

Preferably, the second data transducing element is configured with a greater magnetic stability than the first data transducing element.

According to another aspect of the present invention, there is provided a magnetic element comprising:
a first transducing element positioned laterally adjacent a second transducing element, each transducing element adapted to selectively read data and measure clearance from an adjacent data storage media.

Preferably, the first and second transducing elements are positioned between common top and bottom magnetic shields.

Preferably, a third transducing element is positioned laterally adjacent the first transducing element, opposite the second transducing element.

In this case, it is preferred that the third transducing element can selectively read data and measure clearance from the data storage media.

Preferably, the third transducing element exclusively measures clearance from the data storage media.

Preferably, the first transducing element is connected to a clearance adjustment means capable of altering the distance between the first transducing element and the data storage media.

According to a further aspect of the present invention, there is provided a method comprising:
positioning first and second data transducing elements adjacent a data storage media; and selectively reading data and measuring clearance from the adjacent data storage media.

Preferably, the first data transducing element reads data while the second data transducing element measures clearance from the data storage media.

Preferably, the first data transducing element measures clearance from the data storage media while the second data transducing element reads data.

Preferably, the first and second data transducing elements successively measure clearance from the data storage media for redundant verification.

Preferably, the second data transducing element is capable of detecting contact with the data storage media and thermal asperities from measured clearance from the data storage media while the second data transducing element reads data.

Preferably, the first and second transducing elements concurrently operate with different first and second fixed frequency signals, the first fixed frequency signal matching a data rate signal and the second fixed frequency signal being lower than the data rate.

Preferably, the first and second transducing elements concurrently read data from different data tracks of the data storage media.

### Brief Description of the Drawings

FIG. 1 is a block representation of an example portion of a data storage device.
FIG. 2 provides a cross-sectional block representation of an example magnetic element capable of being used in the data storage device of FIG. 1.
FIG. 3 shows an ABS view of a portion of an example magnetic element.
FIG. 4 displays a top view block representation of a portion of an example data storage device.
FIG. 5 illustrates an ABS view of a portion of an example magnetic element constructed in accordance with various embodiments.
FIG. 6 displays an ABS view of an example magnetic element capable of being used in the data storage device of FIG. 1.
FIG. 7 is a flowchart of a data access routine conducted in accordance with various embodiments.

### Detailed Description

Data storage devices have advanced towards greater data capacity and faster data access rates, but can be susceptible to magnetic and physical instability. With rotating data storage components, clearance between a magnetic media and a transducing head can be reduced to increase data bit density on the media at the cost of volatility due to environmental conditions. Monitoring of environmental conditions, such as head-disk clearance, may be conducted by processing the readback signal of a data sensor. However, occasional data sensor instability can produce erroneous measurements resulting in data access errors and head-disk interface failure. Thus, there is a continued demand in the industry for increased reliability in environmental measurements such as head-disk clearance.

Accordingly, a magnetic element, such as a magnetic data reader or writer, may be constructed with first and second data transducing elements that are each adapted to selectively read data and measure clearance from an adjacent data storage media. The use of multiple data transducers provides a number of operational and structural options that allow for increased data access reliability and accuracy. One such option is the ability to use a first transducer for data bit access while concurrently measuring head-disk clearance with a second transducer.

Another option constructs the second transducer with a larger physical size and reduced magnetic shielding that is utilized to provide continuous head-disk clearance measurements and occasional redundant data bit sensing. These magnetic element configurations illustrate how multiple data transducers can be tuned to provide increased data access performance, especially in reduced form factor data storage devices.

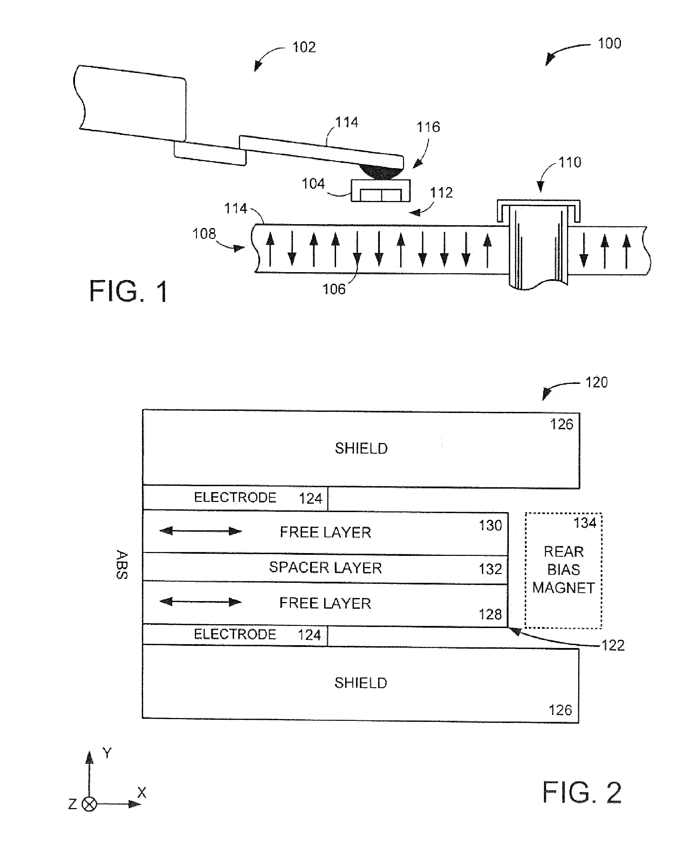

As an example of an environment in which a magnetic element with multiple data transducers can be practiced, FIG. 1 generally displays a data transducing portion 100 of a data storage device. The transducing portion 100 is shown in an environment in which various embodiments of the present disclosure can be practiced. However, it will be understood that the various embodiments of this disclosure are not so limited by such environment and the various embodiments of a magnetic element with multiple transducers can be implemented to a variety of manners to increase data access reliability and accuracy.

The transducing portion 100 has an actuating assembly 102 that positions a transducing head 104 over programmed data bits 106 present on a magnetic storage media 108. The storage media 108 is attached to a spindle motor 110 that rotates during use to produce an air bearing surface (ABS) 112 on which a slider portion 114 of the actuating assembly 102 flies to position a head gimbal assembly (HGA) 116, which includes the transducing head 104, over a desired portion of the media 108.

The transducing head 104 can include one or more transducing elements, such as a magnetic writer and magnetically responsive reader as well as one or more environmental sensors, such as a head-disk clearance sensor that may or may not be capable of accessing data, which operate to program and read data from the storage media 108, respectively. In this way, controlled motion of the actuating assembly 102 and spindle motor 110 can modulate the position of the transducing head both laterally along predetermined data tracks (not shown) defined on the storage media surfaces and vertically as measured perpendicularly to the media surface 114 to selectively write, read, and rewrite data.

FIG. 2 shows a cross-sectional block representation of an example transducing element 120 capable of being used in the transducing portion 100 of FIG. 1. While not required or limited to the configuration shown in FIG. 2, the magnetic element 120 has a magnetic stack 122 disposed between electrode layers 124 and magnetic shields 126 on an air bearing surface (ABS). The magnetic stack can be configured as a variety of different data bit sensing laminations, such as a magnetoresistive, tunnel magnetoresistive, and spin valve, but in some embodiments is a trilayer sensor in which first and second ferromagnetic free layers 128 and 130 that are each bipolar and sensitive to external magnetic fields.

The free layers 128 and 130 are each contactingly adjacent a non-magnetic spacer layer 132 that acts to provide a measureable magnetoresistive effect between layers 128 and 130. The coupled lamination of the free layers 128 and 130 to the spacer layer 132 can be characterized as a trilayer due to the lack of any fixed magnetization, such as a reference layer or antiferromagnetic coupling layer. Such lack of magnetization can be offset by the presence of a rear bias magnet 134 adjacent the magnetic stack 122, distal the ABS, that induces the free layers 128 and 130 to a default magnetization that can be overcome when proximal to a data bit, such as data bit 106 of FIG. 1.

Configuring a transducing element 120 with a rear bias magnet 134 instead of adding a reference layer in the magnetic stack 122 can reduce the shield-to-shield spacing of the element 120 without sacrificing signal sensitivity and amplitude. Regardless of size and data accessing construction of the magnetic stack 122, a plurality of data transducing elements, such as magnetic element 120, can be placed in a transducing head, like transducing head 104 of FIG. 1, to concurrently float on an air bearing proximal a data storage media.

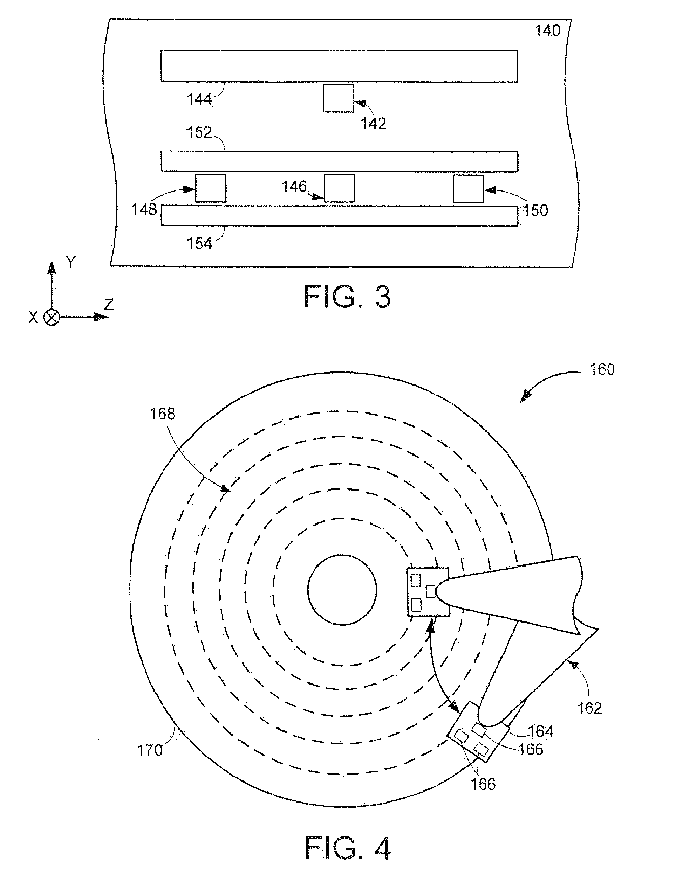

FIG. 3 provides an ABS block representation of an example magnetic element 140 configured with a transducing writer element 142 adjacent a writing feature 144, which can be configured as a magnetic shield and ABS protrusion to accommodate a variety of different data access operations. The magnetic element 140 can further be configured with first 146, second 148, and third 150 transducing reader elements capable of independently or concurrently reading data and sensing environmental measurements, such as head-disk clearance and thermal asperities.

As shown, each transducing reader elements 146, 148, and 150 are disposed between reader features 152 and 154, but such configuration is not liming as the reader features 152 and 154 can be a variety of different components, much like writing feature 144, and can be positioned proximal to one or more transducing elements depending on the magnetic scope intended for the respective elements 146, 148, and 150. The fact that three transducing elements 146, 148, and 150 are used in also not limiting as less or more than three elements can be constructed to provide a wide range of magnetic element 140 embodiments.

In one such magnetic element 140 construction embodiment, the first transducing reader element 146 is configured as a trilayer magnetic stack that is capable of sensing data bits while the second and third transducing reader elements 148 and 150 are configured as magnetoresistive sensors utilizing a fixed magnetic reference layer to sense data. Despite the different reader element configurations, the use of data bit sensitive magnetic stacks for each element 146, 148, and 150 can allow for environmental measurements through processing of the amplitude and harmonic ration of sensed data signals. That is, each transducing reader element 146, 148, and 150 can read data bits and measure environmental conditions such as head-disk clearance.

The utilization of different magnetic stack laminations can allow for cost and manufacturing time efficient construction of a magnetic element 140 as some magnetic stack laminations can be made faster and at less expense than other data bit sensitive laminations. The use of multiple transducing reader elements 146, 148, and 150 that provides the ability to redundantly sense data and measure environmental conditions further allows for the construction of some or all of the elements 146, 148, and 150 with different magnetic and physical tolerances.

For example, the central first transducing reader element 146 may be configured with a reduced size emphasizing accurate data bit sensing while the second and third reader elements 148 and 150 have a greater size and reduced shielding. Such varying reader element configurations can be utilized without detriment to the integrity of data bits or condition measurements due to the redundant data sensing and environmental measurement capabilities provided by having multiple reader elements 146, 148, and 150.

The laterally aligned, along the Z axis, positioning of the transducing reader elements 146, 148, and 150 can allow for efficient magnetic shielding while measuring conditions across relatively large distances, but such a configuration can be altered to accommodate a variety of operating conditions. FIG. 4 provides a top view block representation of a data transducing portion 160 of an example data storage device that generally illustrates accommodated operating conditions.

The configuration of an actuating assembly 162 with a gimbaled head 164 having multiple reader elements 166 arranged in a substantially triangular shape can mitigate the effects of skew angle and allow for occasional or constant two-dimensional data sensing from different data tracks 168 of the data media 170. That is, the reader elements 166 can be positioned anywhere on the head 164 to allow concurrent reading of data from adjacent data tracks 168 and the alignment of the respective elements with different data tracks 168 regardless of the rotational position of the head 164 with respect to the center of the media 170.

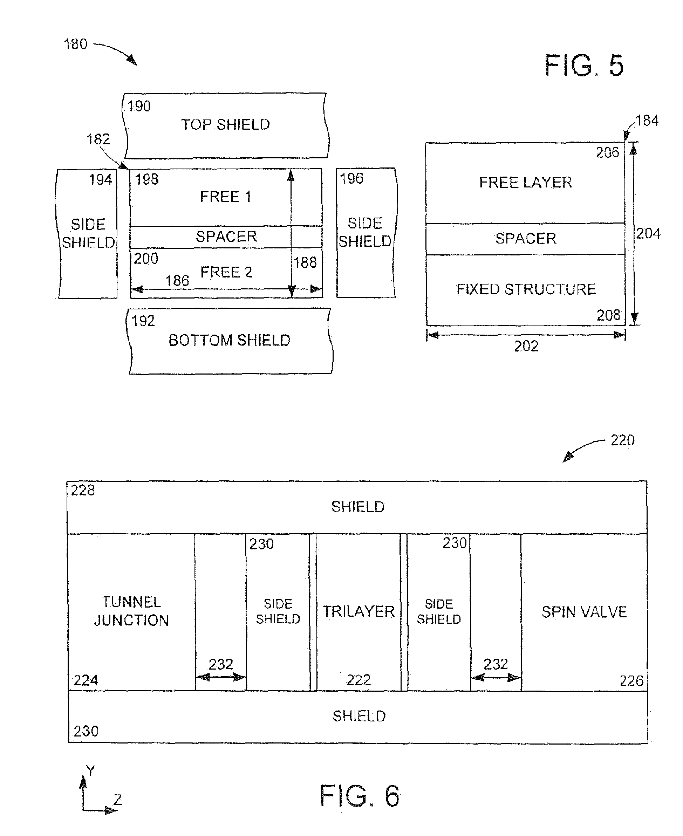

FIG. 5 focuses in on an ABS portion of an example magnetic element 180 arranged in accordance with some embodiments where first and second transducing reader elements 182 and 184 are constructed with differing configurations to provide a range of structural and operational tuning. In the embodiment shown in FIG. 5, the first transducing reader element 182 has an areal extent defined by a first width 186 and height 188 that are respectively chosen to allow access to increased data bit density and reduced form factor data tracks.

The physical size of the first transducing reader element 182, as defined by the areal extent, can be complemented by a magnetic size tuned with the positioning of at least top 190, bottom 192, left side 194, and right side 196 shields proximal to various portions of the first transducing reader element 182. The size, material, and orientation of the various shields 190-196 are not limited to a particular design, but can be tuned to continuously extend along the first reader width 186 or height 188 to prevent errant magnetic flux from affecting the magnetization of the first or second magnetically free layers 198 and 200.

With the unlimited physical and magnetic configurations possible through tuning of the first transducing reader element 182, the precise construction of such tuned components can be costly in terms of both manufacturing time and materials. While having at least one reader element tuned for precise magnetic and physical size can be present in some embodiments to provide a high degree of data bit sensing accuracy, the use of multiple reader elements may lessen the precision of the physical and magnetic tuning of the first transducing reader element 182.

The utilization of a shielded first transducing reader element 182 can further allow for the other reader elements to be configured with different structural and operational characteristics conducive to increased efficiency. The example embodiment of FIG. 5 illustrates how the second transducing reader element 184 has a greater areal extent, with larger second reader width 202 and height 204, little magnetic shielding material proximal to the magnetically free layer 206, and a fixed magnetic structure 208, such as an AFM, which can be more efficiently constructed and provide increased magnetic size that can complement the magnetic sensing of the first transducing reader element 182 to increase data bit sensing accuracy and speed.

The ability to construct the second transducing reader element 184 with greater tolerances for magnetic sensitivity and stability, such as configuring the second reader 184 to use a fixed frequency signal that is lower than the data rate, allows for the second reader element 184 to be tuned, in some embodiments, to specifically detect various operational conditions, such as thermal asperities, head-disk contact, and head-disk clearance. It should be noted that while the second reader element 184 can be tuned in a variety of different manners, the combined function as a transducing element and a sensor provides the ability to selectively operate with redundant operation of the multiple reader elements to read data as well as sense environmental conditions.

For the purposes of this disclosure, the term "transducing element" is meant to describe a magnetic stack lamination capable of sensing data bit present on a rotating data media across an air bearing from the magnetic stack. Furthermore, the term "selectively" is meant to describe the ability to activate, or deactivate, the operation of an element at will. For example, a transducing element that continually senses environmental conditions and reads data is not a selective component. However, a transducing element that reads data and senses environmental conditions for a predetermined time before proceeding to read data or measure environmental conditions would be a selective component.

FIG. 6 displays an example magnetic element 220 illustrating how first 222, second 224, and third 226 transducing reader elements can be uniquely tuned in accordance with various embodiments. While the use of three identical transducing reader elements is not precluded, configuring the first reader element 222 as a trilayer magnetic stack while the second reader element 224 is a magnetic tunnel junction and the third reader element 226 is a spin valve can provide a variety of operational capabilities. For instance, the trilayer magnetic stack can provide a heightened level of magnetic sensitivity and stability due to the small physical size and presence of magnetic shields 228 and 230 while the tunnel junction and spin valve magnetic stacks can be more efficiently made with less stringent tolerances that reduce manufacturing time and expense.

Various embodiments segment portions of one or both magnetic shields 228 and 230 to provide the ability to selectively use the second and third reader elements 224 and 226 to read data and measure environmental conditions. Such a shield configuration can allow for utilization of the strengths of each magnetic stack configuration without sacrificing data access speed and accuracy. That is, a spin valve may provide a quickly produced magnetic stack capable of detecting a variety of environmental conditions while the tunnel junction may have an increased level of data bit sensing accuracy that is efficiently produced with tolerances and physical size greater than that of the trilayer magnetic stack.

Regardless of the strengths of the various reader element configurations, the ability to use different transducing laminations with varying tolerances, sensitivities, and stability can be tuned, such as by adjusting the distance 232 from the side shields 230 to the external second and third reader elements 224 and 226, to provide a magnetic element capable of sophisticated magnetic reading, such as two-dimensional data sensing, with increased accuracy due to the capability of monitoring environmental conditions and reading data bits both redundantly and separately.

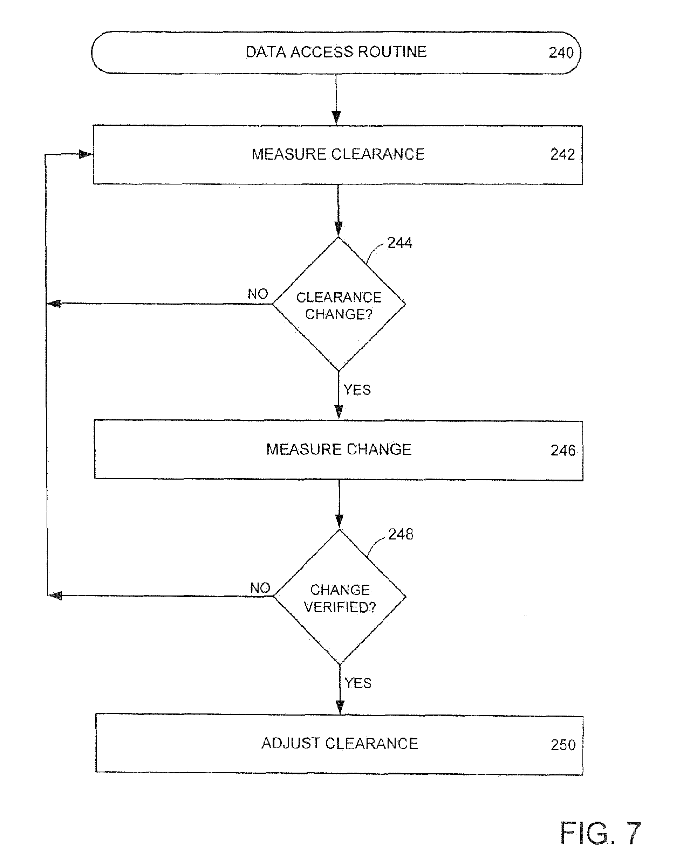

FIG. 7 provides an example data access routine 240 performed in accordance with various embodiments to utilize a magnetic element, such as magnetic elements 140, 180, and 220, with multiple transducing elements. While not explicitly stated in routine 240, it is understood that a magnetic element with at least two transducing elements that are each tuned for size, material, and shielding configuration is positioned in operational engagement with a data storage media across an air bearing.

With the magnetic element constructed and in place, the routine 240 can continually or sporadically measure clearance with at least one of the transducing elements in step 242. There is no limit or requirement to the type and manner of clearance measurement as step 242 can use field adjust fly height (FAFH), contact detection, thermal asperity detection, and proximity sensing by one or more of the transducing elements concurrently or successively. The variety of clearance measurement options illustrates how diverse step 242 can be conducted to accommodate a variety of different operational criteria, such as data transfer rates, accuracy, and post-trauma vibrations. In other words, the manner in which step 242 is conducted can be modified, such as from concurrent measurements by each transducing element to a single measurement by one transducing element, on-the-fly without bringing the magnetic element offline.

Regardless of how the clearance between the magnetic element and data storage media is measured in step 242, decision 244 continually monitors the measurements for a change. If no change is detected, the routine 240 returns to step 242 to continue measuring head-media clearance. However, if a change in the clearance is detected, for whatever reason, step 246 determines the validity and extent of the change. In some embodiments, step 246 modifies the clearance measuring manner of the magnetic element by concurrently attaining clearance data from each transducing element of the magnetic element.

The clearance data from step 246 is then evaluated by decision 248 to determine the validity of the change in clearance detected in decision 244. A clearance change that does not meet a minimum threshold advances the routine 240 back to the clearance measurements of step 242 while a verified clearance change above the minimum threshold proceeds to step 250 where the position of the magnetic element in relation to the data storage media is actively adjusted. There is no limitation or requirement as to how such an adjustment takes place, but various embodiments modify clearance through heater variations, actuator speed changes, and media spin rate alterations.

It can be appreciated that routine 240 can continually or sporadically conducted by one or more magnetic elements to monitor and adjust to a predetermined head-media clearance. However, the routine 240 of FIG. 7 is not limiting as the various steps and decisions can be omitted, changed, and added. For example, the construction of each transducing element as a lamination capable of sensing data bits allows for data to be accessed from the data media at any time during routine 240, which can be implemented into routine 240 as one or more step operating concurrently or individually with the various clearance measurements.

With the various structural and operational configurations of a magnetic element with multiple transducing elements that can selectively read data and measure head-media clearance, sophisticated data sensing can increase data accuracy and transfer rates due at least to the ability to access data from multiple transducing elements individually or collectively. The ability to simultaneously read data and measure head-media clearance allows for data accuracy and speed to be maintained during foreseen and unforeseen circumstances. Moreover, the ability to modify the manner in which data and clearance measurements are sensed allows for adaptation and tuning of magnetic element performance to accommodate a variety of different characteristics, such as increased data accuracy. In addition, while the embodiments have been directed to magnetic sensing, it will be appreciated that the claimed technology can readily be utilized in any number of other applications, such as data programming.

It is to be understood that even though numerous characteristics and advantages of various embodiments of the present disclosure have been set forth in the foregoing description, together with details of the structure and function of various embodiments, this detailed description is illustrative only, and changes may be made in detail, especially in matters of structure and arrangements of parts within the principles of the present disclosure to the full extent indicated by the broad general meaning of the terms in which the appended claims are expressed. For example, the particular elements may vary depending on the particular application without departing from the spirit and scope of the present technology.

## Claims

1. An apparatus comprising first and second data transducing elements (146, 148) each adapted to selectively read data and measure clearance from an adjacent data storage media.

2. The apparatus of claim 1, wherein each data transducing element is a magnetoresistive sensor.

3. The apparatus of claim 1, wherein at least one of the data transducing elements comprises multiple magnetically free layers (198, 200) and no fixed magnetization reference.

4. The apparatus of claim 3, wherein a bias magnet (134) is positioned adjacent the first transducing element, distal an air bearing surface.

5. The apparatus of any one of the preceding claims, wherein the second data transducing element (148, 150) has a greater air bearing surface area than the first data transducing element (146).

6. The apparatus of claim 1, wherein the second data transducing element (226) is configured as a spin valve comprising metallic ferromagnetic layers.

7. The apparatus of any one of the preceding claims, wherein the second data transducing element is configured with a greater magnetic stability than the first data transducing element.

8. An apparatus according to any one of the preceding claims, the apparatus being a magnetic element
the first transducing element (146) positioned laterally adjacent the second transducing element (148.

9. The magnetic element of claim 8, wherein the first and second transducing elements are positioned between common top and bottom magnetic shields (228, 230).

10. The magnetic element of claim 8 or claim 9, wherein a third transducing element (150) is positioned laterally adjacent the first transducing element, opposite the second transducing element.

11. The magnetic element of claim 10, wherein the third transducing element is adapted to selectively read data and measure clearance from the data storage media.

12. The magnetic element of claim 10, wherein the third transducing element is adapted to exclusively measure clearance from the data storage media.

13. The magnetic read element of any one of claims 8 to 12, wherein the first transducing element is connected to a clearance adjustment means capable of altering the distance between the first transducing element and the data storage media.

14. A method comprising:
positioning first and second data transducing elements (136, 148) adjacent a data storage media (170); and
selectively reading data and measuring clearance from the adjacent data storage media.

15. The method of claim 14, wherein the first data transducing element (146) reads data while the second data transducing element (148) measures clearance from the data storage media.

16. The method of claim 14, wherein the first data transducing element (146) measures clearance from the data storage media while the second data transducing element (148) reads data.

17. The method of claim 14, wherein the first and second data transducing elements successively measure clearance from the data storage media for redundant verification.

18. The method of claim 14, wherein the second data transducing element (148) is capable of detecting contact with the data storage media and thermal asperities from measured clearance from the data storage media while the second data transducing element reads data.

19. The method of claim 14, wherein the first and second transducing elements concurrently operate with different first and second fixed frequency signals, the first fixed frequency signal matching a data rate signal and the second fixed frequency signal being lower than the data rate.

20. The method of claim 14, wherein the first and second transducing elements concurrently read data from different data tracks of the data storage media.
